# EUROPEAN PATENT SPECIFICATION

(11) **EP 2 852 695 B1**
(45) Date of publication and mention of the grant of the patent: **27.09.2017**
(21) Application number: 13737363.5
(22) Date of filing: 21.05.2013
(51) Int. Cl.: C22C 9/00, C22C 9/04, C22C 30/02, C22C 30/04, C22C 30/06, B23K 35/30

(54) **ALLOY FOR BRAZE WELDING**
LEGIERUNG ZUM HARTLÖTEN
ALLIAGE POUR SOUDOBRASAGE

(30) Priority: 23.05.2012 IT VI20120121
(43) Date of publication of application: 01.04.2015
(73) Proprietor: Legor Group S.p.A., 36050 Bressanvido (Vicenza) (IT)
(72) Inventor: BAUDELLINI, Benito, I-36057 Arcugnano (VI) (IT)
(74) Representative: Bonini, Ercole
(86) International application number: PCT/IB2013/000996
(87) International publication number: WO 2013/175290

(56) References cited:
- WO-A1-2011/053506
- GB-A- 1 462 661
- US-A- 2 777 767

## Description

### Technical field of the invention

The invention concerns an alloy for braze welding, in particular for joining components in sintered hard metal to other components in iron or steel. The alloy can be applied in the sector of cutting tools.

### State of the art

Brazing consists in connecting metal pieces with the aid of a weld metal with no need to melt the pieces to be assembled. The weld metal penetrates between the pieces to be assembled by capillarity.

Brazing is used especially when:
- it is necessary to heat the piece only to a limited extent;
- the joints are constituted by materials that are difficult to weld;
- the pieces are of a different nature and it is impossible to weld them. Different heating means can be used, depending on the melting temperature of the weld metal.

Brazing can be carried out both with means similar to those used for oxyacetylene welding (torch welding) and through electric heating (in particular, braze welding for applications in the field of electronics), as well as in a vacuum oven or in controlled atmosphere, in order to obtain joints with higher and more controllable quality.

The physical phenomena through which brazing is obtained are capillary penetration and wettability.

The former is obtained by creating suitable empty spaces between the components to be joined; the latter, instead, exploits the capacity of liquid metals to rest on a surface with small contact angles.

Braze welding is characterized by the use of weld materials with higher melting temperatures compared to strong brazing, and in any case temperatures that are lower than the melting point of the material of the joint. The preparation of the joints is often similar to the preparation required for autogenous welding. The process is not based on capillary attraction but mainly on the diffusion of the weld alloy in the intergranular structure of the base material.

Brazing alloys are generally eutectic compounds consisting of two metals. Braze welding alloys with a high silver content are presently used to join components in sintered hard metal to other parts in iron or steel.

A typical alloy contains approximately 49% silver by weight with the addition of copper and zinc as main constituents.

The high silver content is disadvantageous as it involves high costs for the raw materials.

In the known art there are only a few brazing alloys with a relatively low silver content, which are described for example in patents GB 1 462 661 and US 2,777,767 and in the international patent application WO 2011/053506 A1.

### Presentation of the invention

It is the object of the present invention to provide an alloy for braze welding that has a considerably reduced silver content compared to the known alloys and at the same time allows the braze welding of components in sintered hard metal with other components in iron or steel with good results.

The objects mentioned above are achieved by an alloy for braze welding as defined in the first claim.

The percentages indicated below must always be understood as percentages by weight.

Notwithstanding its low silver content, the braze welding alloy according to the present invention offers satisfying characteristics as regards its ability to join components in sintered hard metal, in particular hard metals comprising iron and cobalt, with other components in iron or steel.

The alloy is particularly useful in the production of cutting tools, where there is the need to join sintered hard metals to parts in steel or iron, in particular in order to incorporate the cutting means, such as a diamond.

The proposed alloy has an optimal capacity to adhere to the metal compounds to be connected, as well as optimal wettability characteristics during the braze welding process, and can be used with the same braze welding techniques applied to the alloys with a high silver content known in the art, ensuring excellent mechanical properties of the final components.

As an alternative, in the alloy indium can be replaced with tin, however obtaining slightly less satisfying results.

Preferred variants of the alloy according to the invention are described here below, corresponding to optimised compositions, within the general formulation, which make it possible to further improve the characteristics related to braze welding and to the adhesion to sintered hard metals and iron and steel starting from the base alloy as defined in the first claim. Advantageously, the alloy comprises at least one of the following elements: from 0.001% to 6% tin, from 0.001% to 4% iron, from 0.001% to 3% silicon, from 0.001% to 2% chromium, and from 0.001% to 2% phosphorus. The alloy preferably comprises all the elements listed above.

According to a preferred variant embodiment of the invention, the alloy substantially consists of 18% to 29% silver, 12% to 30% zinc, 0.2% to 5% manganese, 0.001% to 5% nickel, 0.001% to 5% indium, optionally 0.001% to 6% tin, 0.001% to 4% iron, 0.001% to 3% silicon, 0.001% to 2% chromium, and 0.001% to 2% phosphorus, wherein the remaining percentage necessary to reach 100% by weight is constituted by copper.

Without the presence of further elements in the final alloy, it is possible to obtain an excellent braze welding means for the application described above.

The expression "substantially consisting of" means that traces of other elements are allowed but are to be considered as impurities or traces of auxiliary compounds used during the production of the alloy, which however disappear almost completely during production.

According to a preferred variant embodiment of the invention, the alloy comprises 22% to 26% silver, 20% to 28% zinc, 1% to 2% manganese, 1% to 2% nickel, 1% to 2% indium.

Optimal results can be obtained with an alloy according to the invention that preferably comprises approximately 24% silver, approximately 24% zinc, 1% to 2% manganese, 1% to 2% nickel, 1% to 2% indium.

Advantageously, the alloy comprises the following elements in quantities lower than 0.5%: tin, iron, silicon, chromium and phosphorus.

According to an advantageous variant embodiment of the invention, the alloy substantially consists of approximately 24% silver, approximately 24% zinc, 1% to 2% manganese, 1% to 2% nickel, 1% to 2% indium, wherein the remaining percentage necessary to reach 100% by weight is constituted by copper.

The alloy according to the invention is preferably a braze welding alloy.

The alloy according to the invention has all the characteristics required of braze welding alloys.

An important aspect of the invention concerns the use of the alloy that is the subject of the invention to join components in sintered hard metal, preferably containing iron and cobalt, to other components in iron or steel through braze welding. The formulation of the alloy according to the invention is particularly suitable for the specified use, thanks to its optimal wettability characteristics during the braze welding process, and thanks to its optimal adhesion and, in general, mechanical properties on the indicated materials. Joining these materials is especially necessary in the field of cutting tools.

A further aspect of the invention thus concerns also a cutting tool whose components, made with different metals, have been joined using the alloy according to the invention. Preferably, the different metals are sintered hard metals, such as metals containing iron and cobalt, and iron or steel. Advantageously, a cutting diamond is incorporated among the different metals. The invention achieves the object of providing an alloy for braze welding that has a low silver content while at the same time offering quite satisfying braze welding and adhesion properties, suitable for industrial applications. The relatively limited percentage of silver allows a considerable reduction in the cost of raw materials.

Further variants of the invention are described in the dependent claims.

In practical application, the alloy, its use and the cutting tool that are the subjects of the present invention can be subjected to further modifications or variants not described herein. Said modifications or variants must all be considered protected by the present patent, provided that they fall within the claims that follow.

### Description of preferred embodiments of the invention

The production of the alloy is carried out according to the methods known in the art for producing braze welding alloys. For example, it is possible to mix the individual molten metals; the addition of individual constituents to a base master alloy can also be considered.

The alloy as defined above can be used with the braze welding techniques known in the art, which are not described here below for the sake of brevity, and can be used in the formats known in the art, such as wire, rod, strip, ring, sheet, powder, paste, pre-formed and composite.

Table 1 below shows an example of an alloy according to the invention, which offers optimal braze welding performance when joining a sintered hard iron containing iron and cobalt to steel:

**Table 1**

| **metal** | **content [% by weight]** |
|---|---|
| silver | 24 |
| copper | balance to 100% |
| zinc | 24 |
| manganese | 1-2 |
| nickel | 1-2 |
| indium | 1-2 |

## Claims

1. Alloy for braze welding, comprising 18% to 29% silver by weight, 12% to 30% zinc by weight, 0.2% to 5% manganese by weight, 0.001 % to 5% nickel by weight, 0.001% to 5% indium by weight, optionally 0.001% to 6% tin by weight, 0.001% to 4% iron by weight, 0.001% to 3% silicon by weight, 0.001% to 2% chromium by weight, 0.001% to 2% phosphorus by weight and optionally other elements in quantities lower than 1% by weight, wherein the remaining percentage required to reach 100% by weight is constituted by copper.

2. Alloy according to claim 1), **characterized in that** it comprises at least one of the following elements: 0.001% to 6% tin by weight, 0.001% to 4% iron by weight, 0.001% to 3% silicon by weight, 0.001% to 2% chromium by weight, 0.001% to 2% phosphorus by weight.

3. Alloy according to any of the preceding claims, **characterized in that** it comprises 22% to 26% silver by weight, 20% to 28% zinc by weight, 1% to 2% manganese by weight, 1 % to 2% nickel by weight, 1 % to 2% indium by weight.

4. Alloy according to claim 3), **characterized in that** it comprises approximately 24% silver by weight and approximately 24% zinc by weight.

5. Alloy according to claim 4), **characterized in that** it comprises the elements tin, iron, silicon, chromium and phosphorus in quantities lower than 0.5% by weight.

6. Alloy according to claim 4), **characterized in that** it consists of approximately 24% silver by weight, approximately 24% zinc by weight, 1% to 2% manganese by weight, 1% to 2% nickel by weight, 1% to 2% indium by weight, wherein the remaining percentage necessary to reach 100% by weight is constituted by copper.

7. Alloy according to any of the preceding claims, **characterized in that** it is a braze welding alloy.

8. Use of the alloy according to any of the preceding claims to join components in sintered hard metal, preferably containing iron and cobalt, to other components in iron or steel through braze welding.

9. Cutting tool wherein components in different metals have been joined using the alloy according to any of the claims from 1) to 7).

## Patentansprüche

1. Legierung zum Hartlöten, Folgendes umfassend: 18% bis 29% Gewichtsanteil Silber, 12% bis 30% Gewichtsanteil Zink, 0,2% bis 5% Gewichtsanteil Mangan, 0,001% bis 5% Gewichtsanteil Nickel, 0,001% bis 5% Gewichtsanteil Indium, optional 0,001% bis 6% Gewichtsanteil Zinn, 0,001% bis 4% Gewichtsanteil Eisen, 0,001% bis 3% Gewichtsanteil Silikon, 0,001% bis 2% Gewichtsanteil Chrom, 0,001% bis 2% Gewichtsanteil Phosphor und optional weitere Elemente in Mengen unter 1% Gewichtsanteil, wobei der verbleibende, zum Erreichen von 100% Gewichtsanteil erforderliche Prozentsatz aus Kupfer besteht.

2. Legierung gemäß Patentanspruch 1), **dadurch gekennzeichnet, dass** sie wenigstens eines der folgenden Elemente umfasst: 0,001% bis 6% Gewichtsanteil Zinn, 0,001% bis 4% Gewichtsanteil Eisen, 0,001% bis 3% Gewichtsanteil Silikon, 0,001% bis 2% Gewichtsanteil Chrom, 0,001% bis 2% Gewichtsanteil Phosphor.

3. Legierung gemäß eines jeden der vorstehenden Patentansprüche, **dadurch gekennzeichnet, dass** sie Folgendes umfasst: 22% bis 26% Gewichtsanteil Silber, 20% bis 28% Gewichtsanteil Zink, 1% bis 2% Gewichtsanteil Mangan, 1% bis 2% Gewichtsanteil Nickel, 1% bis 2% Gewichtsanteil Indium.

4. Legierung gemäß Patentanspruch 3), **dadurch gekennzeichnet, dass** sie annähernd 24% Gewichtsanteil Silber und annähernd 24% Gewichtsanteil Zink umfasst.

5. Legierung gemäß Patentanspruch 4), **dadurch gekennzeichnet, dass** sie die Elemente Zinn, Eisen, Silikon, Chrom und Phosphor in Mengen unter 0,5% Gewichtsanteil umfasst.

6. Legierung gemäß Patentanspruch 4), **dadurch gekennzeichnet, dass** sie annähernd 24% Gewichtsanteil Silber, annähernd 24% Gewichtsanteil Zink, 1% bis 2% Gewichtsanteil Mangan, 1% bis 2% Gewichtsanteil Nickel, 1% bis 2% Gewichtsanteil Indium umfasst, wobei der verbleibende, zum Erreichen von 100% Gewichtsanteil erforderliche Prozentsatz aus Kupfer besteht.

7. Legierung gemäß eines jeden der vorstehenden Patentansprüche, **dadurch gekennzeichnet, dass** sie eine Hartlötlegierung ist.

8. Verwendung der Legierung gemäß eines jeden der vorstehenden Patentansprüche zur Verbindung durch Hartlöten von Komponenten aus vorzugsweise Eisen und Kobalt enthaltendem, gesintertem Hartmetall mit anderen Komponenten aus Eisen oder Stahl.

9. Schneidwerkzeug, in dem Komponenten aus unterschiedlichen Metallen unter Verwendung der Legierung gemäß eines jeden der Patentansprüche von 1) bis 7) miteinander verbunden wurden.

## Revendications

1. Alliage pour soudo-brasage, comprenant de 18% à 29% en poids d'argent, de 12% à 30% en poids de zinc, de 0,2% à 5% en poids de manganèse, de 0,001% à 5% en poids de nickel, de 0,001% à 5% en poids d'indium, facultativement de 0,001% à 6% en poids d'étain, de 0,001% à 4% en poids de fer, de 0,001% à 3% en poids de silicium, de 0,001% à 2% en poids de chrome, de 0,001% à 2% en poids de phosphore et facultativement d'autres éléments en quantités inférieures à 1% en poids, où le pourcentage restant nécessaire pour atteindre 100% en poids est constitué de cuivre.

2. Alliage selon la revendication 1), **caractérisé en ce qu'**il comprend au moins un des éléments suivants: de 0,001% à 6% en poids d'étain, de 0,001% à 4% en poids de fer, de 0,001% à 3% en poids de silicium, de 0,001% à 2% en poids de chrome, de 0,001% à 2% en poids de phosphore.

3. Alliage selon l'une quelconque des revendications précédentes, **caractérisé en ce qu'**il comprend de 22% à 26% en poids d'argent, de 20% à 28% en poids de zinc, de 1% à 2% en poids de manganèse, de 1% à 2% en poids de nickel, de 1% à 2% en poids d'indium.

4. Alliage selon la revendication 3), **caractérisé en ce qu'**il comprend environ 24% en poids d'argent et environ 24% en poids de zinc.

5. Alliage selon la revendication 4), **caractérisé en ce qu'**il comprend les éléments étain, fer, silicium, chrome et phosphore en quantités inférieures à 0,5% en poids.

6. Alliage selon la revendication 4), **caractérisé en ce qu'**il est constitué d'environ 24% en poids d'argent, environ 24% en poids de zinc, de 1% à 2% en poids de manganèse, de 1% à 2% en poids de nickel, de 1% à 2% en poids d'indium, où le pourcentage restant nécessaire pour atteindre 100% en poids est constitué de cuivre.

7. Alliage selon l'une quelconque des revendications précédentes, **caractérisé en ce qu'**il s'agit d'un alliage de soudo-brasage.

8. Utilisation de l'alliage selon l'une quelconque des revendications précédentes pour unir des composants de métal dur fritté, préférablement contenant fer et cobalt, à d'autres composants de fer ou d'acier par soudo-brasage.

9. Outil de coupe où les composants de métaux différents ont été unis en utilisant l'alliage selon l'une quelconque des revendications de 1) à 7).
